# EUROPÄISCHE PATENTANMELDUNG

(11) **EP 4 223 588 A1**
(43) Veröffentlichungstag der Anmeldung: **09.08.2023**
(21) Anmeldenummer: 23168317.8
(22) Anmeldetag: 29.06.2020
(51) Int. Cl.: B60P 1/44, G08C 17/02, B66F 17/00

(54) **VERFAHREN UND VORRICHTUNG ZUR ERHÖHUNG DER BETRIEBSSICHERHEIT EINER HUBLADEBÜHNE FÜR EIN FAHRZEUG**

(30) Priorität: 28.06.2019 DE 102019117454
(62) Teilanmeldung aus: 20182928.0
(71) Anmelder: Bär Management- und Beteiligungsgesellschaft mbH, 74078 Heilbronn (DE)
(72) Erfinder: Becci, Luca Matteo, 8892 BERSCHIS (CH); Paosut, Marc Somchai, 7492 ALVANEU-DORF (CH); Urban, Dominik, 8630 RÜTI (CH); Baumann, Martin, 8718 SCHÄNIS (CH); Brunner, Michael Christian, 8703 ERLENBACH (CH)
(74) Vertreter: DREISS Patentanwälte PartG mbB

(57) **Zusammenfassung**

Verfahren und Vorrichtung (100) zur Erhöhung der Betriebssicherheit einer Hubladebühne (200) für ein Fahrzeug (202), wobei die Vorrichtung (100) wenigstens eine Erfassungseinrichtung (102) umfasst, die ausgebildet ist, ein Signal von einer Bedieneinrichtung (204) für die Hubladbühne (200) drahtlos zu erfassen, wobei die Vorrichtung (100) eine Ansteuereinrichtung umfasst, die ausgebildet ist, die Hubladebühne (200) abhängig vom Signal der Bedieneinrichtung (204) anzusteuern, wobei die Vorrichtung (100) eine Recheneinrichtung umfasst, die ausgebildet ist, eine Position für die Bedieneinrichtung (204) zu bestimmen, wobei die Vorrichtung (100) einen insbesondere für einen Benutzer der Hubladebühne (200) und der Bedieneinrichtung (202) im Betrieb der Hubladebühne unveränderlichen Speicher für Information über einen zur Bedienung der Hubladebühne (200) freigegeben Raum (206) umfasst, wobei der Raum (206) wenigstens einen Teil eines Arbeitsbereichs (208) der Hubladebühne (200) umgibt oder umfasst, und wobei der Raum (206) abhängig von einer Geometrie des Fahrzeugs (202) auf Positionen begrenzt ist, für die zumindest im Betrieb der Hubladbühne (200) eine Sichtlinie auf wenigstens einen Teil des Arbeitsbereichs (208) möglich ist, wobei die Recheneinrichtung ausgebildet ist, eine Ansteuerung durch die Ansteuereinrichtung freizugeben, wenn festgestellt wird, dass die Position für die Bedieneinrichtung (204) im freigegebenen Raum (206) liegt, oder eine Ansteuerung durch die Ansteuereinrichtung zu unterbinden, wenn festgestellt wird, dass die Position für die Bedieneinrichtung (204) außerhalb des freigegebenen Raums (206) liegt.

## Beschreibung

Die Erfindung geht von einer Vorrichtung und einem Verfahren zum Betreiben einer Hubladbühne aus.

DE 10 2008 028 434 A1 offenbart diesbezüglich Aspekte zur Erhöhung der Betriebssicherheit basierend auf einem Abstand einer Fernbedienung zu einer Ladebordwand für ein Fahrzeug.

Wünschenswert ist es, die Betriebssicherheit einer Hubladebühne für ein Fahrzeug demgegenüber weiter zu verbessern.

Dies wird durch den Gegenstand der unabhängigen Ansprüche erreicht.

Eine Vorrichtung zur Erhöhung der Betriebssicherheit einer Hubladebühne für ein Fahrzeug sieht vor, dass die Vorrichtung wenigstens eine Erfassungseinrichtung umfasst, die ausgebildet ist, ein Signal von einer Bedieneinrichtung für die Hubladbühne insbesondere drahtlos zu erfassen, wobei die Vorrichtung eine Ansteuereinrichtung umfasst, die ausgebildet ist, die Hubladebühne abhängig vom Signal der Bedieneinrichtung anzusteuern, wobei die Vorrichtung eine Recheneinrichtung umfasst, die ausgebildet ist, eine Position für die Bedieneinrichtung zu bestimmen, wobei die Vorrichtung einen insbesondere für einen Benutzer der Hubladebühne und der Bedieneinrichtung im Betrieb der Hubladebühne unveränderlichen Speicher für Information über einen zur Bedienung der Hubladebühne freigegeben Raum umfasst, wobei der Raum wenigstens einen Teil eines Arbeitsbereichs der Hubladebühne umgibt oder umfasst, und wobei der Raum abhängig von einer Geometrie des Fahrzeugs auf Positionen begrenzt ist, für die zumindest im Betrieb der Hubladbühne eine Sichtlinie auf wenigstens einen Teil des Arbeitsbereichs möglich ist, wobei die Recheneinrichtung ausgebildet ist, eine Ansteuerung durch die Ansteuereinrichtung freizugeben, wenn festgestellt wird, dass die Position für die Bedieneinrichtung im freigegebenen Raum liegt, oder eine Ansteuerung durch die Ansteuereinrichtung zu unterbinden, wenn festgestellt wird, dass die Position für die Bedieneinrichtung außerhalb des freigegebenen Raums liegt. Der freigegebene Raum wird abhängig von den geometrischen Dimensionen der Hubladebühne und des Fahrzeugs, an dem die Hubladebühne angeordnet ist vordefiniert. Diese Information wird in einem Speicher abgespeichert, der im Betrieb der Hubladbühne für den Benutzer unveränderlich ist. Damit werden Fehlkonfiguration oder unbeabsichtigte Änderungen durch einen Erwerber des Fahrzeugs mit Hubladbühne vermieden. Beispielsweise wird für eine Hubladbühne, die an einem Heck eines Lastkraftwagens heb- und schwenkbar angeordnet ist, ein Raum definiert, der zum Lastkraftwagen hin durch eine Ebene begrenzt wird, in der das Heck liegt. Zudem kann eine Begrenzung vorgesehen sein, die sich von der Ebene weg vom Lastkraftwagen halbzylinderförmig erstreckt. Andere Formen sind ebenfalls möglich. Unabhängig von einer Reichweite des Signals und der Position der Antennen für den Empfang des Signals ist damit ein freigegebener Raum definierbar, der eine sichere Bedienung mit Sichtkontakt zur Hubladbühne gewährleistet. Bei der herkömmlichen Vorgehensweise ist dies nicht zuverlässig gewährleistet, da beispielsweise durch eine Fehlkonfiguration des zulässigen Abstands der Bedieneinrichtung oder selbst bei korrekter Konfiguration dieses Abstands nicht auszuschließen ist, dass die Geometrie des Fahrzeugs und der Hubladbühne den Sichtkontakt des Benutzers des Bedienteils zum Arbeitsbereich verhindern, obwohl eine Funkverbindung zum Bedienteil besteht.

Vorzugsweise ist vorgesehen, dass wenigstens eine Erfassungseinrichtung an der Hubladbühne angeordnet ist. Diese Anordnung bietet eine platzsparende Lösung, in der eine oder alle Antennen in die Hubladebühne integriert sind. Die Hubladbühne ist bezüglich des Fahrzeugs beweglich. Eine Position der Antennen an der Hubladebühne ist bekannt. Der freigegebene Raum kann von der Position der Hubladbühne abhängig oder unabhängig so definiert werden, dass aus der Position der Bedieneinrichtung stets Sichtkontakt zum Arbeitsbereich der Hubladebühne besteht.

In einem Aspekt ist vorgesehen, dass der Arbeitsbereich abhängig von einer Geometrie einer Plattform der Hubladbühne definiert ist. Damit ist der Sichtkontakt auf die Plattform bestmöglich gewährleistet.

Vorzugsweise sind wenigstens zwei Erfassungseinrichtungen an verschiedenen, insbesondere einander gegenüberliegenden Rändern der Plattform oder an verschiedenen Seiten einer Einrichtung zur Befestigung der Hubladebühne am Fahrzeug angeordnet. Die Antennen, die in eine Plattform der Hubladebühne integriert sein können oder an einer Befestigung, insbesondere einem Hub- und Schwenkwerk angeordnet sein können, werden beispielweise zur Erhöhung einer Messgenauigkeit für eine Bestimmung der Position der Bedieneinrichtung möglichst weit voneinander entfernt angeordnet.

Die Vorrichtung kann ausgebildet sein, die Position der Bedieneinrichtung abhängig von einer Signalstärke oder einer Signallaufzeit des Signals oder abhängig vom Signal durch Triangulation mit wenigstens drei Erfassungseinrichtungen zu bestimmen. Die Signalstärke wird beispielsweise für die Funkverbindung im Vergleich zu einer definierten maximalen Signalstärke direkt aus dem Signal ermittelt. Beispielsweise wird die Ultra-Breitband-Technologie verwendet. Es kann auch Bluetooth oder WLAN gemäß eines der Standards aus der Standard-Familie IEEE 802.11 verwendet werden. Durch Triangulation ist die Position der Bedieneinrichtung relativ zu den Antennen abhängig von einer ersten Signalstärke an einer ersten Antenne, einer zweiten Signalstärke an einer zweiten Antenne und einer dritten Signalstärke an einer dritten Antenne bestimmbar. Die Antennen sind bezüglich des Fahrzeugs in bekannter geometrischer Anordnung voneinander beabstandet angeordnet. Eine Position einer Antenne, die an einem bezüglich des Fahrzeugs bewegbaren Teil der Hubladebühne angeordnet ist, bezüglich des Fahrzeugs ist abhängig von der Geometrie der Hubladbühne in jeder Position der Hubladebühne bekannt. Die erste Signalstärke definiert einen ersten Radius einer ersten Kugel um die erste Antenne, die zweite Signalstärke definiert einen zweiten Radius einer zweiten Kugel um die zweite Antenne die dritte Signalstärke definiert einen dritten Radius einer dritten Kugel um die dritte Antenne. Es kann auch eine jeweilige Signallaufzeit berücksichtigt werden, um den jeweiligen Radius zu definieren. Die Schnittmenge der Punkte der Kugeln ist abhängig von der Geometrie bestimmbar und definiert mögliche Positionen des Bedienteils. Wenn diese im freigegebenen Raum liegen, wird die Ansteuerung in diesem Beispiel freigegeben. Wenn eine mögliche Position außerhalb des freigegebenen Raums liegt, wird die Ansteuerung in diesem Beispiel unterbunden.

Vorzugsweise ist die Recheneinrichtung ausgebildet, die Position der Bedieneinrichtung für eine Freigabe der Ansteuerung zu einem Zeitpunkt des Empfangs des Signals zu bestimmen. Prüfzeitpunkt und Bedienzeitpunkt stimmen damit überein. Aufgrund geringer Signallaufzeiten im Nahbereich ist gewährleistet, dass der Benutzer sich zum Zeitpunkt des Sendens des Signals in Sichtkontakt mit dem Arbeitsbereich befindet.

Ein Verfahren zur Erhöhung der Betriebssicherheit einer Hubladebühne für ein Fahrzeug sieht vor, dass ein Signal von einer Bedieneinrichtung für die Hubladbühne insbesondere drahtlos erfasst wird, wobei eine Position für die Bedieneinrichtung bestimmt wird, wobei Information über einen zur Bedienung der Hubladebühne freigegeben Raum aus einem für einen Benutzer der Hubladebühne und der Bedieneinrichtung im Betrieb der Hubladebühne unveränderlichen Speicher bereitgestellt wird, wobei der Raum wenigstens einen Teil eines Arbeitsbereichs der Hubladebühne umgibt oder umfasst, und wobei der Raum abhängig von einer Geometrie des Fahrzeugs auf Positionen begrenzt ist, für die zumindest im Betrieb der Hubladbühne eine Sichtlinie auf wenigstens einen Teil des Arbeitsbereichs möglich ist, wobei entweder die Hubladebühne angesteuert wird, wenn festgestellt wird, dass die Position für die Bedieneinrichtung im freigegebenen Raum liegt, oder wobei eine Ansteuerung unterbunden wird, wenn festgestellt wird, dass die Position für die Bedieneinrichtung außerhalb des freigegebenen Raums liegt. Dies erhöht die Betriebssicherheit signifikant.

In einem Aspekt des Verfahrens wird das Signal von einer Erfassungseinrichtung erfasst, die an der Hubladbühne angeordnet ist.

In einem Aspekt des Verfahrens ist der Arbeitsbereich abhängig von der Geometrie der Plattform der Hubladbühne definiert.

Vorteilhaft ist es, wenn das Signal von wenigstens zwei Erfassungseinrichtungen erfasst wird, die an verschiedenen, insbesondere einander gegenüberliegenden Rändern der Plattform oder an verschiedenen Seiten einer Einrichtung zur Befestigung der Hubladebühne am Fahrzeug angeordnet sind. Dies erhöht die Messgenauigkeit.

Die Position der Bedieneinrichtung wird vorzugsweise abhängig von einer Signalstärke des Signals oder abhängig vom Signal durch Triangulation mit wenigstens drei Erfassungseinrichtungen bestimmt. Diese Verfahren liefern unabhängig von der Geometrie des freigegebenen Raumes besonders im Nahbereich besonders gute Messgenauigkeit.

Die Position der Bedieneinrichtung für die Freigabe der Ansteuerung wird im Verfahren vorzugsweise zu einem Zeitpunkt des Empfangs des Signals bestimmt. Damit wird gewährleistet, dass der Bediener die Bedieneinrichtung betätigt während er im Sichtkontakt zum Arbeitsbereich ist.

Weitere vorteilhafte Ausführungsformen ergeben sich aus der folgenden Beschreibung und der Zeichnung. In der Zeichnung zeigt
- Fig. 1: eine schematische Darstellung einer Vorrichtung zur Erhöhung der Betriebssicherheit einer Hubladbühne für ein Fahrzeug,
- Fig. 2: eine schematische Darstellung des Fahrzeugs mit der Hubladbühne und der Vorrichtung gemäß einer ersten Ausführung,
- Fig. 3: eine schematische Darstellung des Fahrzeugs mit der Hubladbühne und der Vorrichtung gemäß einer zweiten Ausführung,
- Fig. 4: Schritte in einem Verfahren zur Erhöhung der Betriebssicherheit der Hubladebühne,
- Fig. 5: eine schematische Darstellung für eine Berechnung einer Position.

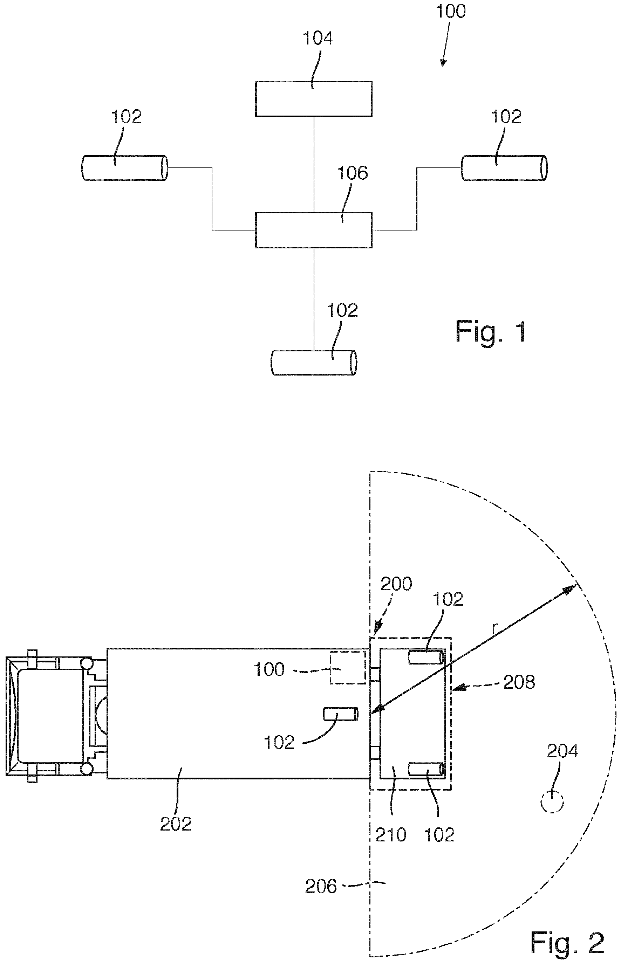

Figur 1 zeigt eine schematische Darstellung einer Vorrichtung 100 zur Erhöhung der Betriebssicherheit einer Hubladebühne eines Fahrzeugs.

Die Vorrichtung 100 umfasst wenigstens eine Erfassungseinrichtung 102, die ausgebildet ist, ein Signal von einer Bedieneinrichtung für die Hubladbühne drahtlos zu erfassen. Die Vorrichtung 100 umfasst vorzugsweise drei Erfassungseinrichtungen 102. Die Erfassungseinrichtung 102 umfasst eine Antenne, insbesondere für den Empfang von Signalen von der Bedieneinrichtung in Ultra-Breiband-Technologie. Es kann auch ein Signalaustausch über Bluetooth oder WLAN gemäß IEEE 802.1 vorgesehen sein. Die Bedieneinrichtung ist ausgebildet das Signal zur Ansteuerung der Hubladebühne, beispielsweise zum Heben oder Schwenken der Hubladebühne, zu erzeugen.

Die Vorrichtung 100 umfasst eine Ansteuereinrichtung 104, die ausgebildet ist, die Hubladebühne 200 abhängig vom Signal der Bedieneinrichtung 204 anzusteuern. Die Ansteuerung der Hubladebühne erfolgt beispielsweise zum Heben oder Schwenken der Hubladebühne.

Die Vorrichtung 100 umfasst eine Recheneinrichtung 106, die ausgebildet ist, eine Position für die Bedieneinrichtung zu bestimmen.

Die Vorrichtung 100 umfasst einen insbesondere für einen Benutzer der Hubladebühne und der Bedieneinrichtung im Betrieb der Hubladebühne unveränderlichen Speicher 108 für Information über einen zur Bedienung der Hubladebühne 200 freigegeben Raum. Der Speicher 108 ist beispielsweise ein nicht-flüchtiger Speicher, der durch Software oder konstruktive Maßnahmen vor einem unerwünschten Zugriff durch den Benutzer geschützt ist. Beispielsweise ist eine Software- oder Hardware-Programmierschnittstelle im Betrieb der Hubladebühne unzugänglich. Der freigegebene Raum wird beispielweise bei einer Fertigung der Hubladebühne abhängig von Geometriedaten der Hubladebühne und/oder des Fahrzeugs, an dem die Hubladbühne angeordnet werden soll, bestimmt und werkseitig oder nach Installation durch Servicepersonal im Speicher 108 gespeichert.

Die Recheneinrichtung 106 ist ausgebildet, eine Ansteuerung durch die Ansteuereinrichtung 104 freizugeben, wenn festgestellt wird, dass die Position für die Bedieneinrichtung im freigegebenen Raum liegt, oder eine Ansteuerung durch die Ansteuereinrichtung 104 zu unterbinden, wenn festgestellt wird, dass die Position für die Bedieneinrichtung außerhalb des freigegebenen Raums liegt. Die Recheneinrichtung 106 umfasst beispielsweise einen Mikroprozessor. Der Speicher 108 kann in den Mikroprozessor integriert sein.

Die Vorrichtung 100 kann ausgebildet sein, die Position der Bedieneinrichtung abhängig von einer Signalstärke oder einer Signallaufzeit des Signals oder abhängig vom Signal durch Triangulation mit wenigstens drei Erfassungseinrichtungen 102 zu bestimmen. Anstelle der Triangulation kann eine Lokalisierung der Bedieneinrichtung mit nur zwei Erfassungseinrichtungen 102 vorgesehen sein. Diese Lokalisierung erfordert weniger Erfassungseinrichtungen ist jedoch nicht eindeutig. Mit einer im Folgenden näher beschriebenen zusätzlichen mathematischen Berechnung wird in diesem Fall sichergestellt, dass die Bedieneinrichtung sich in einem beispielsweise halbkreisförmigen Areal befindet. Dabei kann eine momentane Position der Antennen bezüglich des Fahrzeugs im Betrieb der Hubladebühne abhängig von der Geometrie der Hubladebühne berücksichtigt werden. Die Recheneinrichtung 106 kann ausgebildet sein, die Position der Bedieneinrichtung für eine Freigabe der Ansteuerung zu einem Zeitpunkt des Empfangs des Signals zu bestimmen.

Die Ansteuereinrichtung 104, die Recheneinrichtung 106, der Speicher 108 und die wenigstens eine Erfassungseinrichtung 102 sind im Beispiel über Signalleitungen oder drahtlos mit einer Funkverbindung verbindbar. Die Ansteuereinrichtung 104, die Recheneinrichtung 106 und der Speicher 108 können in ein Gehäuse einer Steuerung für die Hubladebühne integriert sein. Die wenigstens eine Erfassungseinrichtung 102 oder wenigstens eine Antenne wenigstens einer Erfassungseinrichtung 102 können außerhalb des Gehäuses angeordnet sein.

Figure 2 zeigt eine erste Ausführung der Vorrichtung 100, die für die Erhöhung der Betriebssicherheit einer Hubladbühne 200 ausgebildet ist. Die Hubladebühne 200 ist an einem Fahrzeug 202 an dessen Heck angeordnet. Die Hubladebühne 200 kann auch an anderer Stelle, beispielsweise seitlich am Fahrzeug 202 angeordnet sein. Die Hubladebühne 200 ist durch die in Figur 2 dargestellten Bedieneinrichtung 204 drahtlos, insbesondere mit Ultra-Breitband-Technologie, ansteuerbar.

Beispielhaft für einen freigegebenen Raum ist in Figur 2 ein Raum 206 dargestellt, der wenigstens einen Teil eines Arbeitsbereichs 208 der Hubladebühne 200 umgibt oder umfasst. Der Arbeitsbereich 208 ist im Beispiel abhängig von einer Geometrie einer Plattform 210 der Hubladbühne 200 definiert. Die Plattform 210 weist im Beispiel eine rechteckförmige Oberfläche auf, die als Tragfläche für Nutzlast ausgebildet ist. Der Raum 206 ist im Beispiel abhängig von einer Geometrie des Fahrzeugs 202 auf Positionen begrenzt, für die zumindest im Betrieb der Hubladbühne 200 eine Sichtlinie auf wenigstens einen Teil des Arbeitsbereichs 208 möglich ist. Im Beispiel ist der Raum 206 zum Fahrzeug 202 hin durch eine Ebene begrenzt, in der das Heck liegt. Diese korrespondiert mit der Seite der Hubladebühne 200, an der die Hubladebühne 200 am Fahrzeug 202 befestigt ist. Die Ebene ist in diesem Beispiel auch unabhängig von einer Kenntnis über die Geometrie des Hecks des Fahrzeugs 202 definierbar. Zudem ist in diesem Beispiel eine Begrenzung des Raums 206 vorgesehen, die sich von der Ebene weg vom Fahrzeug 202 halbzylinderförmig erstreckt. Letztere Begrenzung kann auch entfallen. Befindet sich der Benutzer in diesem Raum 206, ist aufgrund der Geometrie der Hubladebühne 200 und des Fahrzeugs 202 eine sichere Bedienung mit Sichtkontakt zur Hubladbühne 200 möglich.

Information über diesen Raum 206 wird im Beispiel im Rahmen der Montage der Hubladebühne 200 an dem Fahrzeug 202 abhängig von der Geometrie bestimmt und werkseitig im Speicher 108 bereitgestellt.

Im Beispiel ist wenigstens eine Erfassungseinrichtung 102 an der Hubladbühne 200 angeordnet. Genauer sind im Beispiel wenigstens zwei Erfassungseinrichtungen 102 an verschiedenen, insbesondere einander gegenüberliegenden Rändern der Plattform 210 angeordnet.

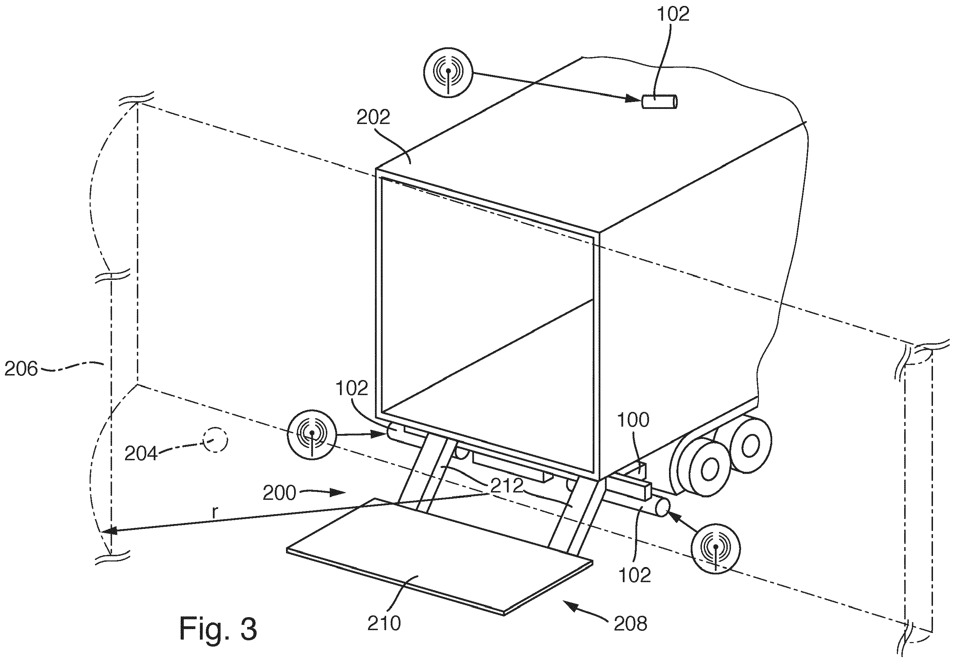

Im Unterschied zur ersten Ausführung sind in der in Figur 3 dargestellten zweiten Ausführung der Vorrichtung wenigstens zwei Erfassungseinrichtungen 102 an verschiedenen Seiten einer Einrichtung 212 zur Befestigung der Hubladebühne 200 am Fahrzeug 202 angeordnet. Die Einrichtung 212 ist beispielsweise ein Hub- und Schwenkwerk der Hubladebühne 200. Im Übrigen entspricht die zweite Ausführung der ersten Ausführung. Für Elemente der zweiten Ausführung mit derselben Funktion wie in der ersten Ausführung werden in Figur 3 dieselben Bezugszeichen verwendet, wie in Figur 2.

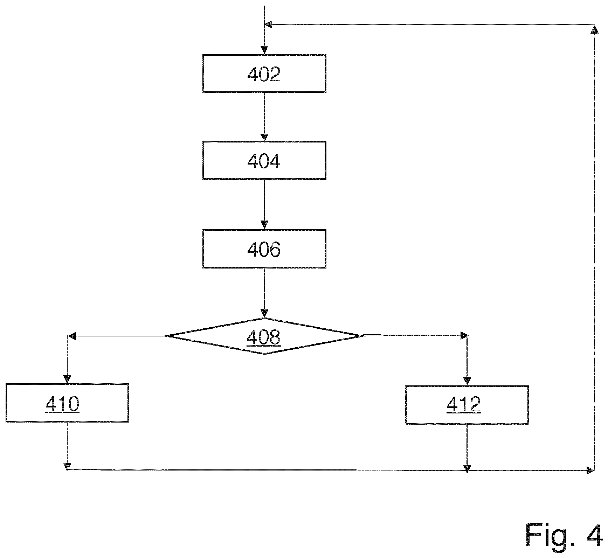

Ein Verfahren zur Erhöhung der Betriebssicherheit einer Hubladebühne für ein Fahrzeug wird im Folgenden mit Bezug auf Figur 4 beschrieben.

Das Verfahren wird beispielsweise mit der Vorrichtung 100 ausgeführt, wenn die Hubladebühne 200 im Betrieb ist.

In einem Schritt 402 wird ein Signal von der Bedieneinrichtung 204 für die Hubladbühne 102 drahtlos erfasst. Das Signal wird beispielsweise von einer Erfassungseinrichtung 102 erfasst, die an der Hubladbühne angeordnet ist. Sofern die Erfassungseinrichtung 102 an einer vom Heck des Fahrzeugs 202 entfernten Stelle der Plattform 210 angeordnet ist, kann eine Erfassungseinrichtung 102 ausreichen, um zu gewährleisten, dass die Bedieneinrichtung 204 sich im freigegebenen Raum 206 befindet. Insbesondere ist dies möglich, wenn die Reichweite des Signals definitionsgemäß geringer als die Entfernung zum Heck des Fahrzeugs ist. Die Position der Bedieneinrichtung 204 wird in diesem Fall abhängig von einer Signalstärke des Signals bestimmt. Vorzugsweise wird das Signal der Bedieneinrichtung 204 zudem von wenigstens zwei Erfassungseinrichtungen 102 erfasst, die an verschiedenen, insbesondere einander gegenüberliegenden Rändern der Plattform 210 oder an verschiedenen Seiten der Einrichtung 212 zur Befestigung der Hubladebühne 200 am Fahrzeug 202 angeordnet sind. Durch Triangulation ist damit die Position der Bedieneinrichtung 204 abhängig von den jeweiligen Signalstärken oder Signallaufzeiten zuverlässig bestimmbar.

In einem anschließenden Schritt 404 wird eine Position für die Bedieneinrichtung 204 bestimmt. Die Position der Bedieneinrichtung 204 wird im Beispiel für eine Freigabe der Ansteuerung zu einem Zeitpunkt des Empfangs des Signals bestimmt. Vorzugsweise wird die Position durch Triangulation mithilfe von Trilateration ermittelt indem für jede Erfassungseinrichtung 102 eine Signallaufzeit des Signals zur jeweiligen Erfassungseinrichtung 102 bestimmt wird und ein Schnittpunkt von Umkreisen um die jeweiligen Erfassungseinrichtungen 102 in einer horizontalen Ebene bestimmt wird. Dazu wird bei unterschiedliche hoch über dem Boden angeordneten Erfassungseinrichtungen 102 beispielsweise eine Projektion der Umkreise in ein Ebene, die vorzugsweise parallel zum Boden verläuft, verwendet, um als Position in diesem Beispiel den Schnittpunkt der Projektion der Umkreise zu bestimmen. Sofern die Lokalisierung mit nur zwei Erfassungseinrichtungen 102 vorgesehen ist, wird die Position der Bedieneinrichtung 204 durch die im Folgenden beschriebene zusätzliche mathematische Berechnung bestimmt.

Anschließend wird in einem Schritt 406 Information über den zur Bedienung der Hubladebühne 200 freigegeben Raum 206 aus dem insbesondere für den Benutzer der Hubladebühne 200 und der Bedieneinrichtung 204 im Betrieb der Hubladbühne unveränderlichen Speicher 108 bereitgestellt. Der Raum 206 umfasst oder umgibt wenigstens einen Teil des Arbeitsbereichs 208 der Hubladebühne 200. Der Raum 206 ist abhängig von der Geometrie des Fahrzeugs 202 auf Positionen begrenzt, für die zumindest im Betrieb der Hubladbühne 200 eine Sichtlinie auf wenigstens einen Teil des Arbeitsbereichs 208 möglich ist.

Bevorzugt ist der Raum 206 so definiert, dass er den der gesamten Arbeitsbereich 208 umfasst. Der Arbeitsbereich 208 ist beispielsweise durch die Geometrie der Plattform 210 als der Raum über einer Projektion der waagrecht hinter dem Heck des Fahrzeugs 202 angeordneten Plattform 210 senkrecht auf den Boden definiert. Der freigegebene Raum 206 ist beispielsweise wie zuvor beschrieben als ein sich hinter dem Heck des Fahrzeugs über dem Boden erhebender freigegebener Raum 206 mit halbzylindrischem Querschnitt definiert, der diesen Raum umfasst. Ein Radius r des halbzylindrischen Querschnitts beträgt in dem in Figur 2 dargestellten Beispiel 15m. Andere Radien r beispielsweise im Bereich zwischen 1m und 15m, beispielsweise 7m oder 5m sind ebenfalls möglich. Andere geometrische Formen sind ebenfalls möglich. Quaderförmige Räume sind ebenfalls möglich. In diesem Fall wird zur Definition des Raumes anstelle des Radius r eine jeweilige Kantenlänge verwendet. Bei der Trilateration kann auch eine Fläche den freigegebenen Raum charakterisieren, die beispielsweise rechteckig oder Kreissektor-förmig insbesondere halbkreisförmig definiert ist.

Anschließend wird, in einem Schritt 408 geprüft, ob die Position für die Bedieneinrichtung 204 im freigegebenen Raum 206 liegt oder nicht. Wenn festgestellt wird, dass die Position für die Bedieneinrichtung 204 im freigegebenen Raum 206 liegt, wird ein Schritt 410 ausgeführt. Anderenfalls wird ein Schritt 412 ausgeführt.

Im Schritt 410 wird die Hubladebühne 200 angesteuert. Anschließend wird der Schritt 402 ausgeführt.

Im Schritt 412 wird eine Ansteuerung der Hubladebühne 200 unterbunden. Anschließend wird der Schritt 402 ausgeführt.

Optional wird über die Bedieneinrichtung 204 eine Meldung an den Benutzer ausgegeben, wenn festgestellt wird, dass die Position für die Bedieneinrichtung außerhalb des freigegebenen Raums liegt.

Das Verfahren endet beispielsweise, wenn die Hubladebühne 200 nicht mehr verwendet wird.

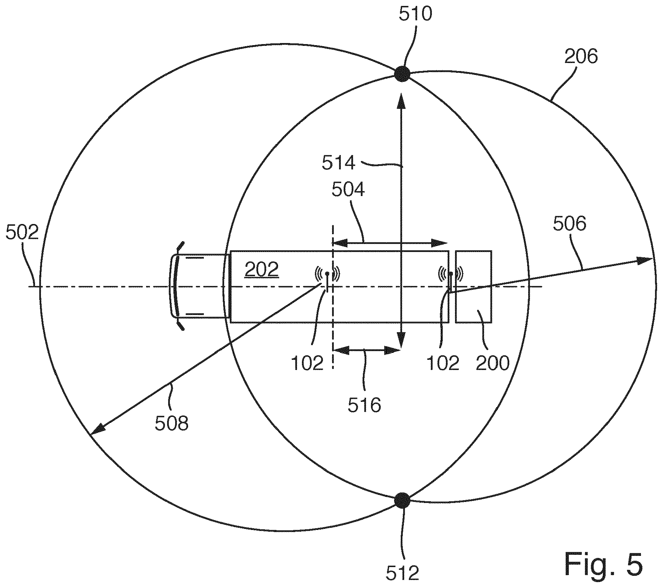

Die Lokalisierung mit nur zwei Erfassungseinrichtungen 102 wird beispielweise mit der folgenden mathematischen Berechnung ermöglicht. Vorzugsweise werden die beiden Erfassungseinrichtungen 102 dazu wie in Figur 5 dargestellt mit in Richtung einer Längsachse 502 des Fahrzeugs 202 unterschiedlichem Abstand. Im Beispiel ist eine erste der beiden Erfassungseinrichtungen 102 an einem Ende des Fahrzeugs 202 angeordnet. Wenn die Hubladebühne 200 seitlich angeordnet ist, kann die Querachse statt der Längsachse 502 zur entsprechenden Anordnung bezüglich eines seitlichen Endes des Fahrzeugs 202 vorgesehen sein. Im Beispiel ist eine zweite der beiden Erfassungseinrichtungen 102 in der Längsrichtung 502 mit einem Abstand 504 von dieser angeordnet. Der Abstand 504 ist kleiner oder gleich einer Länge des Fahrzeugs 202 und beträgt beispielsweise zwischen 1 Meter und 10 Meter, insbesondere 3 Meter oder 4 Meter.

Mit der am hinteren Ende des Fahrzeugs 202 angeordneten ersten Erfassungseinrichtung 102 ist ein erster Abstand 506 zur Bedieneinrichtung 204 beispielsweise durch Auswertung der Signalstärke oder Signallaufzeit feststellbar. Mit der zweiten der beiden Erfassungseinrichtungen 102 ist ein zweiter Abstand 508 zur Bedieneinrichtung 204 beispielsweise durch Auswertung der Signalstärke oder Signallaufzeit feststellbar. Die Abstände definieren Kugeloberflächen, deren Schnittkreis definiert mögliche Positionen der Bedieneinrichtung 204.

Für die mathematische Berechnung wird eine Schnittebene durch die beiden Kugeloberflächen betrachtet, in der beispielsweise beide Erfassungseinrichtungen 102 liegen. Es kann auch eine Ebene verwendet werden, die in einer vorgegebenen Höhe parallel zur Oberfläche verläuft, auf der das Fahrzeug 202 steht.

In Figur 5 sind ein erster Schnittpunkt 510 und ein zweiter Schnittpunkt 512 der beiden Kugeloberflächen und der Ebene dargestellt. Diese stellen zwei mögliche Positionen der Bedieneinrichtung 204 dar.

Mit der mathematischen Berechnung wird festgestellt, ob die beiden Positionen für die Bedieneinrichtung 204 im freigegebenen Raum 206 liegen. Wenn dies der Fall ist, wird die Hubladebühne 200 angesteuert. Anderenfalls wird eine Ansteuerung der Hubladebühne 200 unterbunden.

Beispielsweise wird dazu in der mathematischen Berechnung durch einen der Schnittpunkte ein Lot 514 auf die Längsrichtung 502 gefällt und überprüft, ob eine dadurch definierte Entfernung 516 in Längsrichtung vom Lot 514 zur zweiten der Erfassungseinrichtungen 102 größer als der Abstand 504 ist. Ist dies der Fall, wird festgestellt, dass die Bedieneinrichtung 204 im freigegebenen Raum 206 liegt. Anderenfalls wird festgestellt, dass die Bedieneinrichtung 204 nicht im freigegebenen Raum 206 liegt. Für die mathematische Berechnung nach diesem Beispiel liegen die Erfassungseinrichtungen 102 vorzugsweise wie in Figur 5 dargestellt auf der mittig angeordneten Längsachse 502 des Fahrzeugs 202. Die Erfassungseinrichtungen 102 können auch versetzt dazu und gegeneinander versetzt angeordnet sein. Diese geometrischen Anordnungen können in der mathematischen Berechnung entsprechend mathematisch korrigiert werden. Beispielsweise können je zwei der in Figur 2 oder Figur 3 dargestellten Erfassungseinrichtungen 102 verwendet werden, die in Fahrzeuglängsrichtung voneinander beabstandet angeordnet sind.

## Patentansprüche

1. Vorrichtung (100) zur Erhöhung der Betriebssicherheit einer Hubladebühne (200) für ein Fahrzeug (202), **dadurch gekennzeichnet, dass** die Vorrichtung (100) wenigstens eine Erfassungseinrichtung (102) umfasst, die ausgebildet ist, ein Signal von einer Bedieneinrichtung (204) für die Hubladbühne (200) insbesondere drahtlos zu erfassen, wobei die Vorrichtung (100) eine Ansteuereinrichtung (104) umfasst, die ausgebildet ist, die Hubladebühne (200) abhängig vom Signal der Bedieneinrichtung (204) anzusteuern, wobei die Vorrichtung (100) eine Recheneinrichtung (106) umfasst, die ausgebildet ist, eine Position für die Bedieneinrichtung (204) zu bestimmen, wobei die Vorrichtung (100) einen insbesondere für einen Benutzer der Hubladebühne (200) und der Bedieneinrichtung (202) im Betrieb der Hubladebühne unveränderlichen Speicher (108) für Information über einen zur Bedienung der Hubladebühne (200) freigegeben Raum (206) umfasst, wobei der Raum (206) wenigstens einen Teil eines Arbeitsbereichs (208) der Hubladebühne (200) umgibt oder umfasst, und wobei der Raum (206) abhängig von einer Geometrie des Fahrzeugs (202) auf Positionen begrenzt ist, für die zumindest im Betrieb der Hubladbühne (200) eine Sichtlinie auf wenigstens einen Teil des Arbeitsbereichs (208) möglich ist, wobei die Recheneinrichtung (106) ausgebildet ist, eine Ansteuerung durch die Ansteuereinrichtung (104) freizugeben, wenn festgestellt wird, dass die Position für die Bedieneinrichtung (204) im freigegebenen Raum (206) liegt, oder eine Ansteuerung durch die Ansteuereinrichtung (104) zu unterbinden, wenn festgestellt wird, dass die Position für die Bedieneinrichtung (204) außerhalb des freigegebenen Raums (206) liegt.

2. Vorrichtung (100) nach Anspruch 1, **dadurch gekennzeichnet, dass** wenigstens eine Erfassungseinrichtung (102) an der Hubladbühne (200) angeordnet ist.

3. Vorrichtung (100) nach einem der vorherigen Ansprüche, **dadurch gekennzeichnet, dass** der Arbeitsbereich (208) abhängig von einer Geometrie einer Plattform (210) der Hubladbühne (200) definiert ist.

4. Vorrichtung (100) nach Anspruch 3, **dadurch gekennzeichnet, dass** wenigstens zwei Erfassungseinrichtungen (102) an verschiedenen, insbesondere einander gegenüberliegenden Rändern der Plattform (210) oder an verschiedenen Seiten einer Einrichtung (212) zur Befestigung der Hubladebühne (200) am Fahrzeug (202) angeordnet sind.

5. Vorrichtung (100) nach einem der vorherigen Ansprüche, **dadurch gekennzeichnet, dass** die Vorrichtung (100) ausgebildet ist, die Position der Bedieneinrichtung abhängig von einer Signalstärke oder einer Signallaufzeit des Signals oder abhängig vom Signal durch Triangulation mit wenigstens drei Erfassungseinrichtungen (102) zu bestimmen.

6. Vorrichtung (100) nach einem der vorherigen Ansprüche, **dadurch gekennzeichnet, dass** die Recheneinrichtung (106) ausgebildet ist, die Position der Bedieneinrichtung (204) für eine Freigabe der Ansteuerung zu einem Zeitpunkt des Empfangs des Signals zu bestimmen.

7. Verfahren zur Erhöhung der Betriebssicherheit einer Hubladebühne (200) für ein Fahrzeug (202), **dadurch gekennzeichnet, dass** ein Signal von einer Bedieneinrichtung (204) für die Hubladbühne (200) insbesondere drahtlos erfasst wird (402), wobei eine Position für die Bedieneinrichtung(204) bestimmt wird (404), wobei Information über einen zur Bedienung der Hubladebühne (200) freigegeben Raum (206) aus einem insbesondere für einen Benutzer der Hubladebühne (200) und der Bedieneinrichtung (204) im Betrieb der Hubladebühne unveränderlichen Speicher (108) bereitgestellt wird (406), wobei der Raum (206) wenigstens einen Teil eines Arbeitsbereichs (208) der Hubladebühne umgibt oder umfasst, und wobei der Raum (206) abhängig von einer Geometrie des Fahrzeugs (202) auf Positionen begrenzt ist, für die zumindest im Betrieb der Hubladbühne (200) eine Sichtlinie auf wenigstens einen Teil des Arbeitsbereichs (208) möglich ist, wobei entweder die Hubladebühne (200) angesteuert wird (410), wenn festgestellt wird (408), dass die Position für die Bedieneinrichtung (204) im freigegebenen Raum (206) liegt, oder wobei eine Ansteuerung unterbunden wird (412), wenn festgestellt wird (408), dass die Position für die Bedieneinrichtung (204) außerhalb des freigegebenen Raums (206) liegt.

8. Verfahren nach Anspruch 7, **dadurch gekennzeichnet, dass** das Signal von einer Erfassungseinrichtung (102) erfasst wird (402), die an der Hubladbühne (200) angeordnet ist.

9. Verfahren nach Anspruch 7 oder 8, **dadurch gekennzeichnet, dass** der Arbeitsbereich (208) abhängig von einer Geometrie einer Plattform (210) der Hubladbühne (200) definiert ist.

10. Verfahren nach Anspruch 9, **dadurch gekennzeichnet, dass** das Signal von wenigstens zwei Erfassungseinrichtungen (102) erfasst wird (402), die an verschiedenen, insbesondere einander gegenüberliegenden Rändern der Plattform (210) oder an verschiedenen Seiten einer Einrichtung (212) zur Befestigung der Hubladebühne (200) am Fahrzeug (202) angeordnet sind.

11. Verfahren nach einem der Ansprüche 7 bis 10, **dadurch gekennzeichnet, dass** die Position der Bedieneinrichtung (204) abhängig von einer Signalstärke des Signals oder abhängig vom Signal durch Triangulation mit wenigstens drei Erfassungseinrichtungen (102) bestimmt wird.

12. Verfahren nach einem der Ansprüche 7 bis 11, **dadurch gekennzeichnet, dass** die Position der Bedieneinrichtung (204) für eine Freigabe der Ansteuerung zu einem Zeitpunkt des Empfangs des Signals bestimmt wird.

13. Verfahren nach einem der Ansprüche 7 bis 12, **dadurch gekennzeichnet, dass** die Position der Bedieneinrichtung (204) mit nur zwei Erfassungseinrichtungen 102 lokalisiert wird, die in Richtung einer Achse (502) des Fahrzeugs (202) in unterschiedlichem Abstand zueinander angeordnet sind, wobei ein erster Abstand (506) einer ersten der beiden Erfassungseinrichtungen (102) zur Bedieneinrichtung (204) insbesondere durch Auswertung der Signalstärke oder Signallaufzeit bestimmt wird, wobei ein zweiter Abstand (508) der zweiten der beiden Erfassungseinrichtungen (102) zur Bedieneinrichtung (204) insbesondere durch Auswertung der Signalstärke oder Signallaufzeit bestimmt wird, wobei abhängig vom ersten Abstand (506) und vom zweiten Abstand (508) wenigstens ein Schnittpunkt (510, 512) bestimmt wird, und wobei abhängig von einer Position des Schnittpunkts (510, 512) und abhängig von einem Abstand (504) der beiden Erfassungseinrichtungen (102) voneinander überprüft wird, ob die Bedieneinrichtung (204) sich im freigegebenen Raum (206) befindet oder nicht.

14. Verfahren nach Anspruch 13, **dadurch gekennzeichnet, dass** abhängig von einem Lot (514) durch einen der Schnittpunkte (510) auf die Achse (502) eine Entfernung (516) bestimmt wird, wobei abhängig von einem Vergleich der Entfernung (516) und des Abstands (504) überprüft wird, ob die Bedieneinrichtung (204) sich im freigegebenen Raum (206) befindet oder nicht.
